# EUROPÄISCHE PATENTSCHRIFT

(11) **EP 3 458 517 B1**
(45) Veröffentlichungstag und Bekanntmachung des Hinweises auf die Patenterteilung: **05.11.2025**
(21) Anmeldenummer: 17723121.4
(22) Anmeldetag: 15.05.2017
(51) Int. Cl.: C08L 25/12, C08L 51/04

(54) **VERFAHREN ZUR HERSTELLUNG VON ACRYLESTER-STYROL-ACRYLNITRIL-COPOLYMER FORMMASSEN MIT OPTIMIERTEM RESTMONOMEREN-ANTEIL**
PROCESS FOR PRODUCTING ACRYLIC ESTER-STYRENE-ACRYLONITRILE COPOLYMER MOLDING MASSES HAVING OPTIMIZED RESIDUAL MONOMER FRACTION
PROCÉDÉ DE PRÉPARATION DE MASSES MOULÉES DE COPOLYMÈRE D'ESTER ACRYLIQUE - STYRÈNE - ACRYLONITRILE AYANT UNE PROPORTION OPTIMISÉE DE MONOMÈRES RÉSIDUELS

(30) Priorität: 20.05.2016 EP 16170533
(43) Veröffentlichungstag der Anmeldung: 27.03.2019
(73) Patentinhaber: INEOS Styrolution Group GmbH, 60325 Frankfurt am Main (DE)
(72) Erfinder: NIESSNER, Norbert, 67159 Friedelsheim (DE)
(74) Vertreter: Jacobi, Markus Alexander
(86) Internationale Anmeldenummer: PCT/EP2017/061571
(87) Internationale Veröffentlichungsnummer: WO 2017/198593

(56) Entgegenhaltungen:
- EP-A1- 0 733 678
- EP-A1- 0 733 678
- EP-A2- 0 587 018
- EP-A2- 0 587 018
- WO-A1-2015/165810
- WO-A1-2015/165810
- WO-A1-99/37700
- WO-A1-99/37700

## Beschreibung

### Geänderte Beschreibung

Die vorliegende Erfindung betrifft Verfahren zur Herstellung einer thermoplastischen Formmasse mit reduziertem Restmonomeren-Anteil. Speziell im Bereich der Lebensmittel- oder Spielzeug-Anwendungen sind Hersteller bestrebt, den Restmonomeren-Anteil, insbesondere den Acrylnitril-Gehalt, möglichst gering zu halten und vorzugsweise unter die Grenze von 80 ppm, bezogen auf die Formmasse, zu bringen.

Bei der Herstellung von Acrylester-Styrol-Acrylnitril-Copolymeren (ASA) wird der Hauptteil der Acrylnitril (AN)-Restmonomere über die Emulsionspolymerisation von Styrol-Acrylnitril (SAN) auf einen vernetzten Acrylat-Kautschuk eingetragen.

In WO 95/22570 wird ein Verfahren zur Herstellung eines Acrylnitril-Butadien-StyrolPolymeren (ABS) beschrieben, bei dem ein kleinteiliger Kautschuklatex in Emulsion hergestellt, partiell agglomeriert, und der bimodale Kautschuk-Latex in Emulsion mit Styrol-Acrylnitril-Copolymeren (SAN) gepfropft wird. Das Pfropfpolymer wird von der wässrigen Phase abgetrennt und mit einem SAN-Matrixpolymer schmelzvermischt, wobei sich SAN-Pfropfhülle und SAN-Matrix in ihrem Acrylnitril-Gehalt um nicht mehr als 6 Gew.-% unterscheiden. Eine Reduktion des Restmonomeren-Anteil an Acrylnitril wird nicht beschrieben.

EP 0733678 offenbart thermoplastische Formmassen, enthaltend A) 50 bis 99 Gew.-%, bezogen auf das Gesamtgewicht der Formmasse, eines schlagzäh modifizierten Polymerisats, B) 1 bis 20 Gew.-%, bezogen auf das Gesamtgewicht der Formmasse, einer Mischung aus B1 ) einem Copolymer mit einpolymerisierten Einheiten, die sich von einer polymerisierbaren Carbonsäure oder deren Derivaten ableiten und B2 ) einem Polyamid, C) 0 bis 40 Gew.% faser- oder teilchenförmige Füllstoffe oder deren Mischungen und D) 0 bis 20 Gew.% übliche Zusatzstoffe und Verarbeitungshilfsmittel.

WO 1999/037700 offenbart ein Verfahren zur Herstellung von kautschukelastischen Mikrosuspensions(pfropf)polymerisaten durch
(1) Dispergieren eines Gemisches aus den Komponenten A11 bis A13, deren Gesamtgewicht 100 Gew.-% ergibt,
   a11: 30 bis 99,9 Gew.-% ethylenisch ungesättigte Monomere als Komponente A11,
   a12: 0 bis 20 Gew.-% vernetzende Monomere als Komponente A12,
   a13: 0,1 bis 50 Gew.-% aliphatische Kohlenwasserstoffpolymere mit einer Glasübergangstemperatur von unterhalb C als Komponente A13,
   in Wasser unter Verwendung eines Schutzkolloides zu einer Dispersion mit einem mittleren Teilchendurchmesser von 0,08 bis 100 µm,
(2) Polymerisation der Tröpfchen mit einem radikalischen Polymerisationsinitiator und gegebenenfalls
(3) Pfropfpolymerisation des in Stufe (2) erhaltenen Gemisches in Gegenwart von ethylenisch ungesättigten Monomeren.

EP 0587018 offenbart, dass Mischungen aus schlagzäh modifiziertem SAN mit vorzugsweise etwa 35 Gew.-% AN (bezogen auf SAN), einem α-Methylstyrol/Acrylnitril-Copolymeren einerseits und einem Polyglutarimidpolymeren andererseits eine höhere Wärmeformbeständigkeit und eine verbesserte Kälteschlagzähigkeit aufweisen. Das Dokument offenbart thermoplastische Formmasse auf der Grundlage eines polymethacrylimid-modifizierten ABS- oder ASA-Harzes, im Wesentlichen enthaltend, bezogen auf die Summe aus A und B,
A: 3 bis 97 Gew.-% eines gegebenenfalls schlagzäh modifizierten thermoplastischen Harzes A aus, bezogen auf A,
A1: 50 bis 100 Gew.-% einer Hartphase A1 mit einer Viskositätszahl (VZ) von 50 bis 100 ml/g aus, bezogen auf A1
A11: 5 bis 90 Gew.-% eines Copolymeren A11 aus, bezogen auf A11,
A111: 50 bis 95 Gew.-% Styrol oder eines kernsubstituierten Styrolderivats (A111),
A112: 5 bis 50 Gew.-% Acrylnitril (A112)
   und
A12: 10 bis 95 Gew.-% eines Copolymeren A12 mit einer VZ von 50 bis 70 ml/g aus, bezogen auf A12,
A121: 50 bis 95 Gew.-% α-Methylstyrol (A121),
A122: 5 bis 50 Gew.-% Acrylnitril (A122) und
A2: bis 50 Gew.-% eines teilchenförmigen Pfropfcopolymerisates aus, bezogen auf A2,
A21: 15 bis 85 Gew.-% mindestens eines elastomeren Polymerisats A21 mit einer mittleren Teilchengröße von 30 bis 1000 nm auf der Grundlage eines ggf. in Form eines Copolymerisats vorliegenden 1,3-Polydiens oder eines vorzugsweise vernetzten kautschukelastischen Polyalkylacrylats (A211) als Pfropfgrundlage, und
A22: 15 bis 85 Gew.-% einer auf das elastomere Polymerisat A21 aufgepfropften Hülle A22 aus, bezogen auf A22,
A221: 50 bis 90 Gew.-% mindestens eines vinylaromatischen Monomeren A221 und
A222: 10 bis 50 Gew.-% mindestens eines polaren copolymerisierbaren ethylenisch ungesättigten Monomeren A222; und
B: 3 bis 97 Gew.-% eines Polymethacrylimids (Polyglutarimids) B.

WO 2015/165810 betrifft thermoplastische Formmassen mit optimiertem Restmonomeranteil und offenbart ein Verfahren zur Herstellung von Styrol-Pfropf-Copolymeren, umfassend das Zugeben von Styrol-Monomeren A1 und Vinylcyanid-Monomeren A2 zu einer Pfropfgrundlage B (Pfropf-Copolymerisieren). Dabei ist das Masseverhältnis der Komponenten A1 zu A2 der Monomerenzugabe am Ende des Zugabe-Zeitraums der Monomeren-Zugabe niedriger als das Masseverhältnis über den gesamten Zeitraum der Monomerenzugabe integriert.

Es besteht die Aufgabe, den Acrylnitril-Gehalt in der Pfropfhülle der Pfropfkomponente der thermoplastischen Formmasse so weit zu reduzieren, dass gegenüber einem angepassten Acrylnitril-Gehalt der Restmonomeren-Anteil um mindestens 5%, bevorzugt 10% reduziert wird, ohne dass sich die mechanischen Eigenschaften des thermoplastischen Polymerprodukts merklich verschlechtern. Bei einem angepassten Acrylnitril-Gehalt weisen S/AN der Matrix A und S/AN der Pfropfhülle B2 denselben Acrylnitril-Gehalt auf.

Überraschender Weise hat sich gezeigt, dass diese Aufgabe durch den Einsatz von thermoplastischen Formmassen, vorzugsweise von Acrylester-Styrol-Acrylnitril-Copolymeren (ASA) gelöst wird, wobei die Differenz im Acrylnitril-Gehalt der Matrix-Komponente A und der Pfropfhülle B2 mindestens 5 Einheiten und maximal 10 Einheiten (Gew.-%) beträgt. Die entsprechenden thermoplastischen Formmassen weisen einen Restmonomeren-Anteil an Acrylnitril kleiner 100 ppm, vorzugsweise kleiner 80 ppm, insbesondere 1-60 ppm, oftmals kleiner 50 ppm, bezogen auf die Formmasse auf.

Ein Aspekt der vorliegenden Erfindung betrifft somit ein Verfahren zur Herstellung einer thermoplastischen Formmasse enthaltend, bezogen auf die Summer der Komponenten A bis D:
a) 30 bis 85 Gew.-% eines oder mehrerer Styrol-Copolymere als Komponente A, aufgebaut aus Styrol (insbesondere mindestens 60 Gew.-%) und mindestens 30 Gew.-% Acrylnitril, bezogen auf Komponente A,
b) 14,9 bis 69,9 Gew.-% eines oder mehrerer schlagzäh-modifizierender Pfropfkautschuke ohne olefinische Doppelbindung in der Kautschukphase als Komponente B, aufgebaut aus mindestens einer Pfropfgrundlage B1 und mindestens einer Acrylnitril-haltigen Pfropfhülle B2,
c) 0 bis 15 Gew.-% eines von den Komponenten A und B unterschiedlichen Polymers als Komponente C, und
d) 0,1 bis 5 Gew.-% Additiv als Komponente D,
   wobei die Differenz im Acrylnitril-Gehalt von Komponente A und von Pfropfhülle B2 mindestens 5 Einheiten (Gew-%) und maximal 10 Einheiten beträgt,
   umfassend die Schritte:
      i) Mischen der Komponenten A und B, und optional der Komponente(n) C und/oder D,
      ii) Compoundieren der unter Schritt i) gemischten Komponenten, und
      iii) Abkühlen und ggf. weitere Verfahrensschritte.
   und wobei in der thermoplastischen Formmasse der Restmonomeren-Anteil an Acrylnitril kleiner 100 ppm, vorzugsweise kleiner 80 ppm, insbesondere kleiner 75 ppm, oftmals 1-60 ppm, insbesondere 1-49 ppm ist.

In einer weiteren Ausführungsform, betrifft die Erfindung ein wie oben beschriebenes Verfahren zur Herstellung einer thermoplastischen Formmasse, in welcher Komponente A ein Styrol-Acrylnitril-Copolymer und/oder ein α-Methylstyrol-Acrylnitril-Copolymer ist, und der Restmonomeren-Anteil in der thermoplastischen Formmasse an Acrylnitril kleiner 75 ppm, oftmals kleiner 50 ppm ist.

In einer weiteren Ausführungsform, betrifft die Erfindung ein wie oben beschriebenes Verfahren zur Herstellung einer thermoplastischen Formmasse, wobei die Komponente A ein Styrol-Acrylnitril-Copolymer mit einem Acrylnitril-Gehalt von 30 bis 35 Gew.-% und einem Styrol-Gehalt von 65 bis 70 Gew.-% ist.

In einer weiteren Ausführungsform, betrifft die Erfindung ein wie oben beschriebenes Verfahren zur Herstellung einer thermoplastischen Formmasse, wobei Komponente B aufgebaut ist aus:
b1) 55 bis 80 Gew.-%, insbesondere 55 bis 65 Gew.-% einer teilchenförmigen Pfropfgrundlage B1 mit einer Glasübergangstemperatur unterhalb von 0 °C, und
b2) 20 bis 45 Gew.-%, insbesondere 35 bis 45 Gew.-% einer Pfropfhülle B2.

Die Erfindung betrifft ein wie oben beschriebenes Verfahren zur Herstellung einer thermoplastischen Formmasse, wobei Pfropfgrundlage (Komponente B1) aufgebaut ist aus:
b11) 80 bis 99,9 Gew.-% mindestens eines C1-8-Alkylesters der Acrylsäure, vorzugsweise C4-8-Alkylacrylaten, insbesondere n-Butylacrylat und/oder 2-Ethylhexylacrylat, als Komponente B-11,
b12) 0,1 bis 5 Gew.-% mindestens eines polyfunktionellen vernetzenden Monomeren aus der Gruppe Butylendiacrylat, Divinylbenzol, Butaindioldimethacrylat, Trimethylolp-ropantri(meth)acrylat, Diallylmethacrylat, Diallylmaleat, Diallylfumarat, Triallylmethacrylat, Triallylisocyanurat, Diallylphthalat, Allylmethacrylat und/oder Dihydrodicyclopentadienylacrylat als Komponente B-12, und ggf.
b13) 0 bis 19,9 Gew.-% Monomeren aus der Gruppe: Vinylacetat, (Meth)acrylnitril, Styrol, Methyl-Styrol, Methylmethacrylat oder Vinylether, als Komponente B-13.

In einer weiteren Ausführungsform, betrifft die Erfindung ein wie oben beschriebenes Verfahren zur Herstellung einer thermoplastischen Formmasse, wobei die Pfropfhülle (Komponente B2) aufgebaut ist aus:
b21) 70 bis 80 Gew.-% eines aromatischen Monomeren aus der Gruppe Styrol oder α-Methylstyrols als Komponente B-21 und
b22) 20 bis 30 Gew.-% Acrylnitril als Komponente B-22.

Die Erfindung ein wie oben beschriebenes Verfahren zur Herstellung einer thermoplastischen Formmasse, wobei der Restmonomeren-Anteil um mindestens 10% kleiner ist als bei thermoplastischen Formmassen, welche den gleichen Acrylnitril-Gehalt in den Komponenten A und B2 aufweisen.

In einer weiteren Ausführungsform, betrifft die Erfindung ein wie oben beschriebenes Verfahren zur Herstellung einer thermoplastischen Formmasse, wobei Komponente B einen mittleren Teilchendurchmesser von 0,05 bis 1,5 µm aufweist. Die Komponente ist oftmals bimodal.

In einer weiteren Ausführungsform, betrifft die Erfindung ein wie oben beschriebenes Verfahren zur Herstellung einer thermoplastischen Formmasse, wobei Komponente B einen mittleren Teilchendurchmesser von 1,6 bis 20 µm aufweist.

### Komponente A

Die thermoplastische Formmasse enthält mindestens 30 Gew.-%, bezogen auf das Gesamtgewicht der thermoplastischen Formmasse, an Styrol-Copolymer(en) als Komponente A (auch Hartmatrix A genannt). Die Styrol-Copolymere sind in der thermoplastischen Formmasse von 30 bis 85 Gew.-%, oftmals von 35 bis 80 Gew.-% und insbesondere von 40 bis 75 Gew.-%, bezogen auf die Summer der Komponenten A bis D, vorhanden.

Als Komponente A enthält die erfindungsgemäße thermoplastische Formmasse ein oder mehrere Styrol-Copolymere. Dabei können in den Copolymeren neben Styrol beliebige geeignete Co-Monomere vorliegen. Bevorzugt handelt es sich um ein Styrol-Acrylnitril-Copolymer oder ein alpha-Methylstyrol-Acrylnitril-Copolymer.

Als Komponente A sind grundsätzlich alle dem Fachmann bekannten und in der Literatur beschriebenen Styrol-Acrylnitril-Copolymere, α-Methylstyrol-Acrylnitril-Copolymere oder deren Mischungen einsetzbar, sofern deren Mischungen eine Viskositätszahl VZ (gemessen nach DIN 53727 bei 25 °C als 0,5 Gew.-%ige Lösung in Dimethylformamid; diese Messmethode gilt auch für alle im folgenden genannten Viskositätszahlen VZ) gleich oder kleiner als 90 ml/g haben.

Bevorzugte Komponenten A sind aufgebaut aus 50 bis 70 Gew.-%, bevorzugt 60 bis 70 Gew.-%, oftmals 65 bis 70 Gew.-%, insbesondere 67 bis 69,9 Gew.-%, Styrol und 30 bis 50 Gew.-%, bevorzugt 30 bis 40 Gew.-%, oftmals 30 bis 35 Gew.-%, insbesondere 30 bis 32,9 Gew.-%, Acrylnitril sowie 0 bis 20 Gew.-%, bevorzugt 0 bis 10 Gew.-%, oftmals 0 bis 5 Gew.-%, insbesondere 0,1 bis 3 Gew.-%, weitere Monomere, wobei die Gew.-% jeweils bezogen sind auf das Gewicht der Komponente A und zusammen 100 Gew.-% ergeben.

Weiterhin bevorzugte Komponenten A sind aufgebaut aus 50 bis 70 Gew.-%, bevorzugt 60 bis 70 Gew.%, oftmals 65 bis 70 Gew.-%, insbesondere 67 bis 69,9 Gew.-%, α-Methylstyrol und 30 bis 50 Gew.-%, bevorzugt 30 bis 40 Gew.-%, oftmals 30 bis 35 Gew.-%, insbesondere 30 bis 32,9 Gew.-%, Acrylnitril sowie 0 bis 20 Gew.-%, bevorzugt 0 bis 10 Gew.-%, oftmals 0 bis 5 Gew.-%, insbesondere 0,1 bis 3 Gew.-%, weitere Monomere, wobei die Gew.-% jeweils bezogen sind auf das Gewicht der Komponente A und zusammen 100 Gew.-% ergeben.

Ebenfalls bevorzugte Komponenten A sind Mischungen dieser Styrol-Acrylnitril-Copolymere und α-Methylstyrol-Acrylnitril-Copolymere untereinander oder mit Polymethylmethacrylat. Das Polymethylmethacrylat kann dabei Alkyl-oder Arylmethacrylate in 0 bis 10 Gew-% enthalten. Acrylnitril ist jedoch erfindungsgemäß mit mindestens 30 Gew.-%, bezogen auf die Komponente A, enthalten.

Als weitere Monomere sind alle copolymerisierbaren Monomere einsetzbar wie beispielsweise p-Methylstyrol, t-Butylstyrol, Vinylnaphthalin, Alkylacrylate und/oder Alkylmethacrylate, beispielsweise solche mit C1- bis C8-Alkylresten, N-Phenylmaleinimid oder deren Mischungen.

Gemäß der Erfindung kann der Begriff Molekulargewicht (Mw) im weitesten Sinne als die Masse eines Moleküls oder einen Bereich eines Moleküls (z. B. ein Polymerstrang, ein Blockpolymer oder ein kleines Molekül) verstanden werden, welches in g/mol (Da) und kg/mol (kDa) angegeben werden kann. Vorzugsweise ist das Molekulargewicht (Mw) das Gewichtsmittel, welches über die im Stand der Technik bekannten Verfahren bestimmt werden kann.

Bevorzugt weist die Komponente A ein Molekulargewicht Mw von 60.000 bis 400.000 g/mol, besonders bevorzugt von 80.000 bis 350.000 g/mol auf, wobei Mw durch Lichtstreuung in Tetrahydrofuran bestimmt werden kann (GPC mit UV-Detektor). Das Molekulargewicht Mw der thermoplastischen Formmassen A kann in einem Bereich von +/-20% variieren. Vorzugsweise enthält die Komponente A ein durch eine chemisch reaktive Funktionalität modifiziertes Styrol-Copolymer, welches, bis auf den Zusatz der Monomere A-I, im Wesentlichen aus denselben Monomeren aufgebaut ist wie das "normale Styrol-Copolymer", wobei der Monomergehalt +/- 5%, das Molekulargewicht +/-20% und der Schmelzflussindex (bestimmt bei einer Temperatur von 220 °C und einer Beladung von 10 kg nach dem ISO Verfahren 1133) +/- 20 % abweichen.

Die Styrol-Copolymere der Komponente A lassen sich nach bekannten Methoden herstellen. Sie lassen sich z. B. durch radikalische Polymerisation, insbesondere durch Emulsions-, Suspensions-, Lösungs- oder Massepolymerisation herstellen, bevorzugt ist die Lösungspolymerisation (siehe GB 1472195). Bevorzugt wird Ethylbenzol als Lösemittel eingesetzt.

### Komponente B

Die thermoplastische Formmasse enthält eines oder mehrere schlagzähmodifizierende Pfropfkautschuke ohne olefinische Doppelbindung in der Kautschukphase als Komponente B. Komponente B kann ein ASA Copolymer sein. Komponente B ist in der thermoplastischen Formmasse von 14,9 bis 69,9 Gew.-%, oftmals von 20 bis 65 Gew.-% und insbesondere von 24,9 bis 59,9 Gew.-%, bezogen auf die Summer der Komponenten A bis D, vorhanden.

Die Komponente B enthält (oder besteht aus) einen oder mehrere schlagzähmodifizierende Pfropfkautschuke ohne olefinische Doppelbindung in der Kautschukphase. Es handelt sich bevorzugt um kautschukelastische Pfropfcopolymere von vinylaromatischen Verbindungen, insbesondere Styrol, und Vinylcyaniden, insbesondere Acrylnitril, auf Polyalkylacrylatkautschuken. Die Komponente B hat in der Regel einen Quellungsindex (bestimmt nach gängigen Methoden in Toluol) von 6 bis 20, bevorzugt von 7 bis 18 und besonders bevorzugt von 7 bis 15. Ohne olefinische Doppelbindung bedeutet in diesem Zusammenhang, dass keine Komponente mit einer olefinischen Doppelbindung eingesetzt wird, und die Komponente B in der Regel nur 0 bis maximal 0,5 Gew.-%, bevorzugt 0 bis 0,2 Gew.-%, besonders bevorzugt 0 bis 0,1 Gew.-%, insbesondere 0 bis 0,01 Gew.-%, olefinische Doppelbindungen enthält.

In einer bevorzugten Ausführungsform ist das kautschukelastische Pfropfcopolymer B aufgebaut aus:
b1) 1 bis 99 Gew.-%, vorzugsweise 55 bis 80 Gew.-%, insbesondere 55 bis 65 Gew.-%, einer teilchenförmigen Pfropfgrundlage B1, mit einer Glasübergangstemperatur unterhalb von 0 °C (bestimmt nach gängigen Methoden), und
b2) 1 bis 99 Gew.-%, vorzugsweise 20 bis 45 Gew.-%, insbesondere 35 bis 45 Gew.-%, einer Pfropfhülle B2, mit einer Glasübergangstemperatur oberhalb von 30 °C, bezogen auf B.

Komponente B1 ist dabei aufgebaut aus
b11) 80 bis 99,9 Gew.-%, insbesondere 90 bis 99,8 Gew.-%, mindestens eines C1-8-Alkylesters der Acrylsäure, vorzugsweise C4 bis 8-Alkylacrylaten, insbesondere n-Butylacrylat und/oder 2-Ethylhexylacrylat, als Komponente B-11,
b12) 0,1 bis 5 Gew.-%, mindestens eines polyfunktionellen vernetzenden Monomeren, vorzugsweise Butylendiacrylat, Divinylbenzol, Butaindioldimethacrylat, Trimethylolpro-pantri(meth)acrylat, Diallylmethacrylat, Diallylmaleat, Diallylfumarat, Triallylmethacrylat, Triallylisocyanurat, besonders bevorzugt Diallylphthalat, Allyl(meth)acrylat, insbesondere Allylmethacrylat, und/oder Dihydrodicyclopentadienylacrylat ("DCPA") als Komponente B-12, und
b13) 0 bis 19,9 Gew.-%, insbesondere 0,1 bis 9,9 Gew.-%, harte Polymere bildenden Monomeren aus der Gruppe: Vinylacetat, (Meth)acrylnitril, Styrol, Methylstyrol, Methylmethacrylat oder Vinylether wie Vinylmethylether, als Komponente B-13.

Komponente B2 ist dabei aufgebaut aus
b21) 70 bis 80 Gew.-%, eines vinylaromatischen Monomeren, insbesondere des Styrols und/oder Styrol-Derivate, z. B. Alkylstyrole, bevorzugt des α-Methylstyrols, und kernalkylierte Styrole, wie z. B. des p-Methylstyrols und/oder des tert.-Butylstyrols oder des N-Phenylmaleinimids als Komponente B-21 und
b22) 20 bis 30 Gew.-% Acrylnitril als Komponente B-22.

Des weiteren kann Komponente B2 0 bis 30 Gew.-%, vorzugsweise 0 bis 20 Gew.-% Acrylsäure, Methacrylsäure, Maleinsäureanhydrid, Methacrylnitril, Methylacrylat, Ethylacrylat, Propylacrylat, Methylmethacrylat, Ethylmethacrylat, Phenylmaleinimid, Acrylamid und/oder Vinylmethylether als Komponente B-23 enthalten.

Bei der Komponente B handelt es sich um ein Pfropfcopolymer, umfassend eine Pfropfgrundlage B1 und mindestens eine Pfropfhülle B2. Das Pfropfcopolymer B kann einen mehr oder weniger perfekt ausgeprägten Kern-Schale-Aufbau aufweisen (Pfropfgrundlage B1 stellt den Kern dar, die Pfropfhülle B2 die Schale).

Es ist aber auch möglich, dass die Pfropfhülle B2 die Pfropfgrundlage B1 nur unvollständig umschließt bzw. bedeckt oder aber auch die Pfropfhülle B2 die Pfropfgrundlage B1 ganz oder teilweise durchdringt.

Die Pfropfgrundlage B1 kann in einer Ausführungsform der Erfindung einen sogenannten Kern enthalten, der aus einem weichen kautschukelastischen Polymer oder einem harten Polymer gebildet werden kann. In den Ausführungsformen, in denen die Pfropfgrundlage B1 einen Kern enthält, wird der Kern bevorzugt aus einem harten Polymer, insbesondere Polystyrol oder einem Styrol-Copolymer, gebildet. Solche Pfropfkerne und deren Herstellung sind dem Fachmann bekannt und beispielsweise in EP-A 535456 und EP-A 534212 beschrieben.

Es ist auch möglich, zwei oder mehr Pfropfgrundlagen B1 einzusetzen, die sich beispielsweise in ihrer Zusammensetzung oder in der Teilchengröße voneinander unterscheiden. Solche Mischungen unterschiedlicher Pfropfgrundlagen können nach dem Fachmann an sich bekannten Methoden hergestellt werden, beispielsweise indem zwei oder mehr Kautschuklatices separat hergestellt und die entsprechenden Dispersionen vermischt werden, aus den entsprechenden Dispersionen separat die Feucht-Kautschuke gefällt und beispielsweise in einem Extruder gemischt werden oder die entsprechenden Dispersionen separat vollständig aufgearbeitet und die erhaltenen Pfropfgrundlagen anschließend vermischt werden.

Das Pfropfcopolymer B kann zwischen der Pfropfgrundlage B1 und der Pfropfhülle B2 ein oder mehrere weitere Pfropfhüllen oder -schalen aufweisen, beispielsweise mit anderen Monomer-Zusammensetzungen. Bevorzugt weist das Pfropfcopolymer B aber außer der Pfropfhülle B2 keine weiteren Pfropfhüllen oder -schalen auf.

Das Polymer der Pfropfgrundlage B1 hat üblicherweise eine Glasübergangstemperatur unter 0 °C, vorzugsweise eine Glasübergangstemperatur unter (-20) °C, insbesondere unter (-30) °C. Ein Polymer aus den die Pfropfhülle B2 bildenden Monomeren besitzt üblicherweise eine Glasübergangstemperatur von mehr als 30 °C, insbesondere mehr als 50 °C (jeweils ermittelt nach DIN 53765).

Die Pfropfcopolymere B haben üblicherweise eine mittlere Teilchengröße d50 von 50 bis 1500 nm, bevorzugt 50 bis 1200 nm, oftmals 50 bis 800 nm, besonders bevorzugt 50 bis 600 nm. Diese Teilchengrößen können erzielt werden, wenn man als Pfropfgrundlage B1 mittlere Teilchengrößen d50 von 50 bis 1000 nm, bevorzugt 50 bis 700 nm besonders bevorzugt 50 bis 500 nm verwendet (gemessen beispielsweise mittels Ultra-zentrifuge).

Gemäß einer Ausführungsform der Erfindung ist die Teilchengrößenverteilung monomodal. Gemäß einer weiteren erfindungsgemäßen Ausführungsform ist die Teilchengrößenverteilung der Komponente B bimodal, wobei 60 bis 90 Gew.-% eine mittlere Teilchengröße von 50 bis 200 nm und 10 bis 40 Gew.-% eine mittlere Teilchengröße von 200 bis 800 nm aufweisen, bezogen auf das Gesamtgewicht der Komponente B. Als mittlere Teilchengröße bzw. Teilchengrößenverteilung werden die aus der integralen Massenverteilung bestimmten Größen angegeben. Bei diesen und den weiteren im Rahmen der vorliegenden Erfindung genannten mittleren Teilchengrößen handelt es sich in allen Fällen um das Gewichtsmittel der Teilchengrößen, die beispielsweise mittels hydrodynamische Chromatographie (HDC) gemessen werden kann (W. Wohlleben and H. Schuch in Measurement of Particle Size Distribution of Polymer Latexes, 2010, Editors: Luis M. Gugliotta and Jorge R. Vega, p. 130 - 153).

Eine Methode zur Charakterisierung des Vernetzungszustandes von vernetzten Polymerteilchen ist die Messung des Quellungsindex QI, der ein Maß für die Quellbarkeit eines mehr oder weniger stark vernetzten Polymeren durch ein Lösemittel ist. Übliche Quellungsmittel sind beispielsweise Methylethylketon oder Toluol. Üblicherweise liegt der QI des Pfropfcopolymers B der erfindungsgemäßen Formmassen im Bereich QI = 6 bis 20. Bevorzugt wird ein QI von 7 bis 18, bevorzugt von 7 bis 15 in Toluol.

Zur Bestimmung des Quellungsindex wird beispielsweise eine wässrige Dispersion des Pfropfcopolymers B auf einem Blech bei 80 °C unter leichtem Vakuum (600 bis 800 mbar) und Stickstoffatmosphäre über Nacht getrocknet. Von dem etwa 2 mm dicken übrigbleibenden Film wird anschließend eine 1 cm² große Scheibe abgeschnitten und in 50 ml Toluol (oder Methylethylketon) in einem Penicillinglas über Nacht gequollen. Das überstehende Toluol wird abgesaugt, der gequollene Film gewogen und über Nacht bei 80 °C getrocknet. Das Gewicht des getrockneten Films wird bestimmt. Der Quellungsindex ergibt sich aus dem Quotienten der Gewichte des gequollenen Gels und dem getrockneten Gel.

Die Pfropfcopolymere B können durch Pfropfpolymerisation der Komponenten B-21 und B-22 auf mindestens eine der vorstehend aufgeführten Pfropfgrundlagen B1 hergestellt werden. Geeignete Herstellverfahren für Pfropfcopolymere B sind die Emulsions-, Lösungs-, Masse- oder Suspensionspolymerisation. Bevorzugt werden die Pfropfcopolymere B durch radikalische Emulsionspolymerisation hergestellt. Diese Emulsionspolymerisation findet in Gegenwart von Latices der Komponente B1 bei Temperaturen von 20 bis 90 °C unter Verwendung wasserlöslicher oder öllöslicher Initiatoren wie Peroxodisulfat oder Benzylperoxid, oder mit Hilfe von Redoxinitiatoren statt. Redoxinitiatoren eignen sich auch zur Polymerisation unterhalb von 20 °C. Geeignete Polymerisationsverfahren sind in WO-A 02/10222, DE-A 2826925, DE-A 3149358 und DE-C 1260135 beschrieben.

Der Aufbau der Pfropfhülle erfolgt vorzugsweise im Emulsionspolymerisationsverfahren, wie es in DE-A 3227555, DE-A 3149357, DE-A 3149358, DE-A 3414118 beschrieben ist.

Das definierte Einstellen der mittleren Teilchengrößen von 50 bis 1200 nm erfolgt bevorzugt nach den Verfahren, die in der DE-C 1260135 und DE-A 2826925, bzw. Applied Polymer Science, Band 9 (1965), Seite 2929 beschrieben sind. Das Verwenden von Polymeren mit unterschiedlichen Teilchengrößen ist beispielsweise bekannt aus DE-A 2826925 und US-A 5196480.

Gemäß dem in der DE-C 1260135 beschriebenen Verfahren wird zunächst die Pfropfgrundlage B1 hergestellt, indem der oder die gemäß einer Ausführungsform der Erfindung verwendeten Acrylsäureester B-11 und die als Vernetzungs- und/oder Pfropfagenz wirkende Verbindung B-12, ggf. zusammen mit den weiteren monoethylenisch ungesättigten Monomeren B-13, in wässriger Emulsion in an sich bekannter Weise bei Temperaturen zwischen 20 und 100 °C, vorzugsweise zwischen 50 und 90 °C, polymerisiert werden. Es können die üblichen Emulgatoren, wie beispielsweise Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen verwendet werden. Vorzugsweise verwendet man die Natriumsalze von Alkylsulfonaten oder Fettsäuren mit 10 bis 18 Kohlenstoffatomen. Gemäß einer Ausführungsform werden die Emulgatoren in Mengen von 0,5 bis 5 Gew.-%, insbesondere von 0,7 bis 2 Gew.-%, bezogen auf die bei der Herstellung der Pfropfgrundlage B1 eingesetzten Monomeren, eingesetzt. Im allgemeinen wird bei einem Gewichtsverhältnis von Wasser zu Monomeren von 4 : 1 bis 0,6 : 1 gearbeitet.

Als Polymerisationsinitiatoren dienen insbesondere die gebräuchlichen Persulfate, wie beispielsweise Kaliumpersulfat. Es können jedoch auch Redoxsysteme zum Einsatz gelangen. Die Initiatoren werden im Allgemeinen in Mengen von 0,1 bis 1 Gew.-%, bezogen auf die bei der Herstellung der Pfropfgrundlage B1 eingesetzten Monomeren, eingesetzt. Als weitere Polymerisationshilfsstoffe können die üblichen Puffersubstanzen, durch welche pH-Werte von vorzugsweise 6 bis 9 eingestellt werden, wie Natriumhydrogencarbonat und Natriumpyrophosphat, sowie 0 bis 3 Gew.-% eines Molekulargewichtsreglers, wie Mercaptane, Terpinole oder dimeres α-Methylstyrol, bei der Polymerisation verwendet werden.

Die genauen Polymerisationsbedingungen, insbesondere Art, Dosierung und Menge des Emulgators, werden innerhalb der oben angegebenen Bereiche im Einzelnen so bestimmt, dass der erhaltene Latex des vernetzten Acrylsäureesterpolymers B1 einen d50-Wert im Bereich von 50 bis 1000 nm, vorzugsweise 50 bis 700 nm, besonders bevorzugt 50 bis 500 nm, besitzt. Die Teilchengrößenverteilung des Latex soll dabei vorzugsweise eng mit einem Polydispersitätsindex < 0.75 sein, entsprechend W. Mächtle and L. Börger, Analytical Ultracentrifugation of Polymers and Nanoparticles, (Springer, Berlin, 2006), ISBN 3-540-23432-2.

Zur Herstellung des Pfropfpolymers B kann in einem nächsten Schritt in Gegenwart des so erhaltenen Latex des vernetzten Acrylsäureester-Polymers B1 gemäß einer Ausführungsform der Erfindung ein Monomerengemisch aus Komponente B-21, bevorzugt Styrol, Komponente B-22, bevorzugt Acrylnitril und/oder eines (Meth)acrylsäureesters, und ggf. weiterer ungesättigter Monomere polymerisiert werden. Dabei können die Monomeren B-21, B-22 und ggf. weitere ungesättigte Monomere einzeln oder in Mischung miteinander zugefügt werden. Beispielsweise kann man zunächst Styrol alleine, und danach eine Mischung aus Styrol und Acrylnitril pfropfen. Es ist vorteilhaft, diese Pfropfcopolymerisation auf das als Pfropfgrundlage dienende vernetzte Acrylsäureesterpolymer wieder in wässriger Emulsion unter den üblichen, vorstehend beschriebenen Bedingungen durchzuführen.

Die Pfropfcopolymerisation kann zweckmäßig im gleichen System erfolgen wie die Emulsionspolymerisation zur Herstellung der Pfropfgrundlage B1, wobei, falls notwendig, weiterer Emulgator und Initiator zugegeben werden kann. Das gemäß einer Ausführungsform der Erfindung aufzupfropfende Monomerengemisch kann dem Reaktionsgemisch auf einmal, absatzweise in mehreren Stufen -beispielsweise zum Aufbau mehrerer Pfropfhüllen- oder vorzugsweise kontinuierlich während der Polymerisation zugegeben werden.

Die Pfropfcopolymerisation des Gemisches der Komponenten B-21, B-22 und ggf. weiterer Monomerer in Gegenwart des vernetzenden Acrylsäureesterpolymers B1 wird so geführt, dass ein Pfropfgrad von 10 bis 70 Gew.-%, vorzugsweise 20 bis 60 Gew.-%, insbesondere 30 bis 55 Gew.-%, bezogen auf das Gesamtgewicht der Komponente B, im Pfropfcopolymer B resultiert. Da die Pfropfausbeute bei der Pfropfcopolymerisation nicht 100% beträgt, sollte vorteilhafter Weise eine etwas größere Menge des Monomerengemisches aus B-21, B-22 und ggf. weiterer Monomerer bei der Pfropfcopolymerisation eingesetzt werden, als es dem gewünschten Pfropfgrad entspricht.

Die Steuerung der Pfropfausbeute bei der Pfropfcopolymerisation und somit des Pfropfgrades des fertigen Pfropfcopolymers B ist dem Fachmann geläufig und kann beispielsweise u.a. durch die Dosiergeschwindigkeit der Monomeren oder durch Reglerzugabe erfolgen (Chauvel, Daniel, ACS Polymer Preprints 15 (1974), Seite 329 bis 333). Bei der Emulsions-Pfropfcopolymerisation entstehen im Allgemeinen 5 bis 15 Gew.-%, bezogen auf das Pfropfcopolymer, an freiem, ungepfropftem Copolymer der Komponenten B-21, B-22 und ggf. der weiteren Monomere.

Der Anteil des Pfropfcopolymers B in dem bei der Pfropfcopolymerisation erhaltenen Polymerisationsprodukt kann beispielsweise nach der in US-A 2004/0006178 beschriebenen Methode ermittelt werden.

In weiteren Ausführungsformen des erfindungsgemäßen Verfahrens kann die Herstellung der Pfropfgrundlage B1 in Gegenwart von Saatpartikeln erfolgen und/oder es kann nach der Herstellung der Pfropfgrundlage B1 und vor dem Aufbringen der Pfropfhülle B2 ein Agglomerationsschritt durchgeführt werden. Diese beiden Verfahrensoptionen sind dem Fachmann bekannt und/oder in der Literatur beschrieben, und werden beispielsweise gewählt, um Teilchengrößen und Teilchengrößenverteilungen gezielt einzustellen.

Saatpartikel haben in der Regel eine Teilchengröße d50 von 10 bis 200 nm, bevorzugt 10 bis 180 nm, besonders bevorzugt 10 bis 160 nm. Es werden bevorzugt Saatpartikel einzusetzen, die eine geringe Breite der Teilchengrößenverteilung haben. Darunter sind Saatpartikel besonders bevorzugt, die eine monomodale Teilchengrößenverteilung haben.

Die Saatpartikel können grundsätzlich aus kautschukelastische Polymere bildenden Monomeren, beispielsweise 1,4-Butadien oder Acrylaten, aufgebaut sein, oder aus einem Polymeren, dessen Glasübergangstemperatur mehr als 0 °C, bevorzugt mehr als 25 °C beträgt, aufgebaut sein. Zu den bevorzugten Monomeren, auf denen diese Saatpartikel basieren, zählen vinylaromatische Monomere wie Styrol, ringsubstiuierte Styrole oder α-Methylstyrol, darunter bevorzugt Styrol, Acrylnitril, Alkylacrylsäure, Alkylacrylate, darunter bevorzugt n-Butylacrylat. Es kommen auch Mischungen aus zwei oder mehr, bevorzugt zwei der genannten Monomeren in Betracht. Ganz besonders bevorzugt sind Saatpartikel aus Polystyrol oder n-Butylacrylat. Die Herstellung derartiger Saatpartikel ist dem Fachmann bekannt oder kann nach an sich bekannten Methoden erfolgen. Bevorzugt werden die Saatpartikel durch partikelbildende heterogene Polymerisationsverfahren, bevorzugt durch Emulsionspolymerisation, erhalten. Die Saatpartikel werden erfindungsgemäß vorgelegt, wobei es möglich ist, die Saatpartikel zunächst separat herzustellen, aufzuarbeiten und dann einzusetzen. Es ist aber auch möglich, die Saatpartikel herzustellen und ihnen danach ohne vorherige Aufarbeitung die Monomermischung aus B-11, B-12 und gegebenenfalls B-13 zuzufügen.

Verfahren zur teilweisen oder vollständigen Agglomeration der Pfropfgrundlage B1 sind dem Fachmann bekannt oder die Agglomeration kann nach dem Fachmann an sich bekannten Methoden vorgenommen werden (siehe z. B. Keppler et al. Angew. Markomol. Chemie, 2, 1968 Nr. 20, Seite 1 bis 25). Die Agglomerationsmethode ist im Prinzip nicht beschränkt. So können physikalische Verfahren wie Gefrier- oder Druckagglomerationsverfahren verwendet werden.

Es können aber auch chemische Methoden eingesetzt werden, um die Pfropfgrundlage zu agglomerisieren. Zu diesen zählt die Zugabe von Elektroyten, wie von anorganischen oder organischen Säuren.

Bevorzugt wird die Agglomeration mittels eines Agglomerationspolymers vorgenommen. Als solche sind beispielsweise Polyethylenoxidpolymere, Polyvinylether oder Polyvinylalkohole zu nennen. Zu den geeigneten Agglomerationspolymeren zählen des weiteren Copolymere die C1- bis C12-Alkylacrylate oder C1- bis C12-Methalkylacrylate und polare Comonomere wie Acrylamid, Methacrylamid, Ethacrylamid, n-Butylacrylamid, Maleinsäureamid oder (Meth)acrylsäure enthalten. Neben diesen Monomeren, können diese Copolymere aus weiteren Monomeren, darunter Dienen wie Butadien oder Isopren aufgebaut sein. Die Agglomerationspolymere können einen mehrstufigen Aufbau aufweisen und z. B. einen Kern/Schale-Aufbau haben. Als Kern kommen z. B. Polyacrylate wie Polyethylacrylat und als Schale kommen Teilchen aus (Meth)alkylacrylaten und den genannten polaren Comonomeren in Betracht. Besonders bevorzugt als Agglomerationspolymer ist ein Copolymer aus 92 bis 99 Gew.-% Ethylacrylat oder -methacrylat und 1 bis 8 Gew.-% (Meth)acrylamid und/oder (Meth)acrylsäuren. Die Agglomerationspolymere werden in der Regel in Form einer Dispersion eingesetzt. Bei der Agglomeration werden in der Regel von 0,1 bis 5, vorzugsweise von 0,5 bis 3 Gew.-% der Agglomerationspolymere, bezogen auf 100 Gew.-% der Pfropfgrundlage eingesetzt.

Die erfindungsgemäßen Pfropfcopolymere B können so weiterverwendet werden, wie sie in der Reaktionsmischung anfallen, beispielsweise als Latexemulsion oder -dispersion. Alternativ und wie es für die meisten Anwendungen bevorzugt ist, können sie aber auch in einem weiteren Schritt aufgearbeitet werden. Maßnahmen zur Aufarbeitung sind dem Fachmann bekannt. Dazu zählt z. B., dass die Pfropfcopolymere B aus der Reaktionsmischung isoliert werden, z. B. durch Sprühtrocknung, Scherung oder durch Fällen mit starken Säuren oder mittels Nukelierungsmitteln wie anorganischen Verbindungen, beispielsweise Magnesiumsulfat. Die in der Reaktionsmischung vorliegenden Pfropfcopolymere B können aber auch dadurch aufgearbeitet werden, dass sie ganz oder teilweise entwässert werden. Ebenso ist es möglich, die Aufarbeitung mittels einer Kombination der genannten Maßnahmen vorzunehmen.

### Komponente C

Als weitere Komponente C enthält die thermoplastische Formmasse gegebenenfalls 0 bis 15 Gew.-%, oftmals 0 bis 10 Gew.-%, besonders bevorzugt 0 bis 8 Gew.-%, oftmals 1 bis 8 Gew-%, bezogen auf die Summer der Komponenten A bis D, eines oder mehrerer, von den Komponenten A und B unterschiedlichen Polymers als Komponente C.

Polycarbonat-Copolymere (PC), Polyamid-Copolymere (PA), Polyurethan-Copolymere (PUR), Polyvinylchlorid-Copolymere (PVC), Polyerster-Copolymere, wie beispielsweise Polyethylenterephthalat-Copolymere (PET), Polyoxymethylen-Copolymere (POM), (halogenhaltige) Polyolefin-Copolymere, wie beispielsweise Polypropylen (PP) oder Polyethylen (PE) und Poly-Acrylnitril-Butadien-Styrol-Copolymere (ABS), sind als Komponente C zu nennen. Insbesondere enthält die Zusammensetzung als Komponente C ein Polycarbonat. Die Herstellung der oben genannten Copolymere ist dem Fachmann bekannt.

### Komponente D

Als weitere Komponente D enthält die thermoplastische Formmasse 0,1 bis 5 Gew.-%, bezogen auf die Summer der Komponenten A bis D, eines oder mehrerer, zu den Komponenten A bis C unterschiedlicher Additive (Hilfs- und Zusatzstoffe).

Teilchenförmige mineralische Füllstoffe, Verarbeitungshilfsmittel, Stabilisatoren, Oxidations-Verzögerer, Mittel gegen Wärmezersetzung und Zersetzung durch ultraviolettes Licht, Gleit- und Entformungsmittel, Flammschutzmittel, Farbstoffe und Pigmente sowie Weichmacher sind zu nennen.

Auch Ester als niedermolekulare Verbindungen sind zu nennen. Gemäß der vorliegenden Erfindung können auch zwei oder mehr dieser Verbindungen verwendet werden. Im Allgemeinen liegen die Verbindungen mit einem Molekulargewicht kleiner 3000 g/mol, vorzugsweise kleiner 500 g/mol vor und insbesondere kleiner 150 g/mol.

Teilchenförmige mineralische Füllstoffe können zum Beispiel durch amorphe Kieselsäure, Carbonate wie Magnesiumcarbonat, Calciumcarbonat (Kreide), gepulverter Quarz, Glimmer, unterschiedlichste Silikate wie Tone, Muskovit, Biotit, Suzoit, Zinnmaletit, Talkum, Chlorit, Phlogopit, Feldspat, Calciumsilikate wie Wollastonit oder Kaolin, besonders kalzinierter Kaolin zur Verfügung gestellt werden.

Unter UV-Stabilisatoren fallen beispielsweise verschiedene substituierte Resorcine, Salicylate, Benzotriazole und Benzophenone, die im Allgemeinen in Mengen bis zu 2 Gew.-% eingesetzt werden können. Beispielsweise kann Tinuvin^{®} 770 (BASF) eingesetzt werden.

Erfindungsgemäß können der thermoplastischen Formmasse Oxidationsverzögerer und Wärmestabilisatoren zugesetzt werden. Sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.-%, bezogen auf das Gewicht der Mischung, sind einsetzbar.

Ferner können gemäß der Erfindung Gleit- und Entformungsmittel, die in der Regel in Mengen bis zu 1 Gew.-% der thermoplastischen Masse zugesetzt werden. Zu nennen sind hier Stearinsäure, Stearylalkohol, Stearinsäurealkylester und -amide, vorzugsweise Irganox^{®}, sowie Ester des Pentaerythrits mit langkettigen Fettsäuren. Es können die Calcium-, Zink- oder Aluminiumsalze der Stearinsäure sowie Dialkylketone, zum Beispiel Distearylketon, eingesetzt werden. Weiterhin können auch Ethylenoxid-Propylenoxid-Copolymere als Gleit- und Entformungsmittel verwendet werden. Ferner könne natürliche sowie synthetische Wachse verwendet werden. Zu nennen sind PP-Wachse, PE-Wachse, PA-Wachse, gepfropfte PO-Wachse, HDPE-Wachsen, PTFE-Wachse, EBS-Wachse, Montanwachs, Carnauba- und Bienenwachse.

Flammschutzmittel können sowohl halogenhaltige als auch halogenfreie Verbindungen sein. Geeignete Halogenverbindungen, wobei bromierte Verbindungen den chlorierten vorzuziehen sind, bleiben bei der Herstellung und Verarbeitung der erfindungsgemäßen Formmasse stabil, so dass keine korrosiven Gase freigesetzt werden und die Wirksamkeit dadurch nicht beeinträchtigt wird. Bevorzugt werden halogenfreie Verbindungen, wie zum Beispiel Phosphorverbindungen, insbesondere Phosphinoxide und Derivate von Säuren des Phosphors und Salze von Säuren und Säurederivaten des Phosphors, verwendet. Besonders bevorzugt enthalten Phosphorverbindungen Ester-, Alkyl-, Cycloalkyl- und/oder Aryl-Gruppen. Ebenfalls geeignet sind oligomere Phosphorverbindungen mit einem Molekulargewicht kleiner 2000 g/mol wie zum Beispiel in EP-A 0 363 608 beschrieben.

Ferner können Pigmente und Farbstoffe enthalten sein. Diese sind allgemein in Mengen von 0 bis 15, bevorzugt 0,1 bis 10 und insbesondere 0,5 bis 8 Gew.-%, bezogen auf die Summer der Komponenten A bis C, enthalten. Die Pigmente zur Einfärbung von Thermoplasten sind allgemein bekannt, siehe zum Beispiel R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen wie Zinkoxid, Zinksulfid, Bleiweiß (2 PbCO3.Pb(OH)2), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz (Fe₃O₄), Spinellschwarz (Cu(Cr,Fe)₂O₄), Manganschwarz (Mischung aus Mangandioxid, Siliciumoxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), S. 78ff). Zur Einstellung bestimmter Farbtöne können anorganische Buntpigmente wie Chromoxidgrün oder organische Buntpigmente wie Azopigmente und Phthalocyanine erfindungsgemäß eingesetzt werden. Derartige Pigmente sind allgemein im Handel erhältlich. Weiterhin kann es von Vorteil sein, die genannten Pigmente bzw. Farbstoffe in Mischung einzusetzen, zum Beispiel Ruß mit Kupferphthalocyaninen, da allgemein die Farbdispergierung in den Thermoplasten erleichtert wird.

Das Mischen der Komponenten A und B und gegebenenfalls der Komponenten C und D zur Herstellung der Formmasse kann nach jeder beliebigen Weise gemäß allen bekannten Methoden erfolgen. Wenn diese Komponenten beispielsweise durch Emulsionspolymerisation hergestellt worden sind, ist es möglich, die erhaltenen Polymerdispersionen miteinander zu vermischen, darauf die Polymere gemeinsam auszufällen und das Polymergemisch aufzuarbeiten. Vorzugsweise erfolgt jedoch das Abmischen dieser Komponenten durch gemeinsames Extrudieren, Kneten oder Verwalzen der Komponenten, wobei die Komponenten, sofern erforderlich, zuvor aus der bei der Polymerisation erhaltenen Lösung oder wässrigen Dispersion isoliert worden sind. Die in wässriger Dispersion erhaltenen Produkte B der Pfropfcopolymerisation können auch nur teilweise entwässert werden und als feuchte Krümel mit der Hartmatrix A vermischt werden, wobei dann während des Vermischens die vollständige Trocknung der Pfropfcopolymere B erfolgt.

Die thermoplastische Formmasse wird hergestellt, umfassend die Schritte (oder bestehend aus den Schritten):
i) Mischen der Komponenten A und B, und optional Komponente(n) C und/oder D,
ii) Compoundieren der unter Schritt i) gemischten Komponenten, und
iii) Abkühlen und ggf. weitere Verfahrensschritte.

Alle dem Fachmann bekannten Extruder eignen sich für das Mischen der Komponenten A und B, und optional der Komponente(n) C und/oder D.

Vorzugsweise erfolgt das Mischen auf einem Zweischneckenextruder. Jedoch kann auch ein Extruder mit drei oder mehr Schnecken, oder auch ein Extruder mit einer Hauptschnecke großen Durchmesser und darum herum angeordneten kleinen Schnecken (Planeten-Anordnung) verwendet werden. Weiterhin rotieren die Schnecken des Extruders bevorzugt gleichsinnig. Jedoch ist auch die gegensinnige Rotation möglich, Besonders bevorzugt wird ein Zweischneckenextruder mit gleichsinnig rotierenden Schnecken eingesetzt.

Vorzugsweise umfasst die Schneckenmaschine mindestens eine Entgasungsöffnung. Im Allgemeinen richtet sich die Anzahl, Anordnung und Ausgestaltung der Entgasungsöffnungen nach der Menge des Gases das die Schneckenmaschine verlassen soll.

Beispielsweise richtet sich die Anzahl, Anordnung und Geometrie der Entgasungsöffnungen bei der Extrusion Wasser enthaltender Thermoplaste nach dem Wassergehalt des Thermoplasten und dem gewünschten Restwassergehalt des Endproduktes.

Zur Herstellung der Formteile, Folien oder Beschichtungen können die üblichen Verfahrensschritte verwendet werden. Beispielsweise kann ein Formteil mittels Kaltverformung erhalten werden. Auch kann die thermoplastische Formmasse nach Schritt (ii) nicht gänzlich abgekühlt und weiterverarbeitet werden.

Die thermoplastische Formmasse weist einen Restmonomeren-Anteil an Acrylnitril kleiner 100 ppm, vorzugsweise kleiner 80 ppm, oftmals kleiner 75 ppm, insbesondere kleiner 65 ppm und ganz besonders bevorzugt kleiner 55 ppm auf.

Erfindungsgemäß ist der Restmonomeren-Anteil der thermoplastischen Formmasse mindestens um 10% kleiner als bei thermoplastischen Formmassen, welche den gleichen Acrylnitril-Gehalt in den Komponenten A (Hartmatrix) und B2 (Pfropfhülle) aufweisen. Die thermoplastische Formmasse eignet sich besonders zur Herstellung von Formteilen, Folien und Beschichtungen.

Die Erfindung wird in den nachfolgenden Beispielen und Ansprüchen näher beschrieben.

### Beispiele

Die Messung der Kerbschlagzähigkeit (ak) erfolgte gemäß ISO 179 1eA (2001) bei 23 °C.

Die Viskositätszahl (VZ) wird gemessen nach DIN 53727 (1980) bei 25 °C als 0,5 Gew.-%ige Lösung in Dimethylformamid.

Der Restmonomeren-Anteil wurde mittels chromatografischer Methoden bestimmt.

Die thermoplastischen Formmassen wurden in einem Doppelschneckenextruder ZDSK 30 der Fa. Werner & Pfleiderer hergestellt.

Der ASA-Kautschuk und das SAN-Polymer wurden wie in EP-B 1400337 beschrieben hergestellt. Die Kautschuk-Menge bezieht sich hierbei auf den Trockenkautschuk.

### a) Herstellung der Hartmatrix A

Die SAN-Matrixpolymere wurden durch kontinuierliche Lösungspolymerisation in einem 100 I-Kessel unter Siedekühlung hergestellt. Die Zulaufzusammensetzung und die Fahr-Daten der Herstellung sind in Tabelle 2a zusammengestellt.

### b) Herstellung der Pfropfkautschuke B

### b1) kleinteilige Grundstufe

| | Material | Menge (g) |
|---|---|---|
| Vorlage | Demineralized water | 2774 |
| | Natrium bicarbonate | 7.0 |
| | Kalium persulfate | 5.5 |
| | K30 (40 wt% in Wasser) | 46 |
| Zulauf | n-Butylacrylat | 1800 |
| | DCPA | 36.7 |
| Gesamt | | 4669.2 |
| Monomere gesamt | | 1836.7 |
| Feststoffgehalt (100% Umsatz) | | 40 % |

### Fahrweise:

VE-Wasser und die Seife (K30, siehe Houben-Weyl, 1962) vorlegen und bei 100 Upm auf 60°C aufheizen. Natriumhydrogencarbonat und Kaliumpersulfat zugeben. Der Zulauf setzt sich aus 98% n - Butylacrylat und 2% Dicyclopentadienylacrylat (DCPA) zusammen. Den Zulauf starten und in 3,5 Stunden zudosieren. 2 Stunden nachpolymerisieren, abkühlen lassen.

### b2) Kleinteiliger Pfropfkautschuk B-i

| Pfropfstufe | Einsatzstoffe | Menge |
|---|---|---|
| Vorlage | Grundstufe (39,6%ig) | 4610,00 g (= 1825,56 g fest) |
| | VE-Wasser | 2832,65 g |
| Zugabe 1 | Kaliumpersulfat | 5,48 g |
| Zulauf 1 | Styrol | 912,78 g |
| | Acrylnitril | 304,26 g |
| | Monomerzulauf gesamt: | 1217,04 g |
| | Monomervorlage: | 253,55 g |
| | Restzulauf: | 963,49 g |

| | |
|---|---|
| Pfropfmonomere gesamt: | 1217,04 g |
| Pfropfgrad: | 40 % |
| Gesamtmenge: | 8726,24 g |
| Gesamtfeststoff: | 3054,18 g |
| Feststoffgehalt theor: | 35,00 % |

Grundstufe und VE-Wasser in den 10 I Kolben der Anlage vorlegen und bei 100 Upm auf 60°C aufheizen. Rührerdrehzahl auf 235 Upm erhöhen und Zugabe1 (KPS) zugeben. 10/48 Teile des Gesamtzulaufs (Acrylnitril/Styrol 25:75 Teile) als Monomervorlage in 20 Minuten zugeben. Den Rest des Zulaufes in 2,5 Stunden zudosieren. Rührerdrehzahl auf 200 Upm zurücknehmen und 2 Stunden bei 65°C nachpolymerisieren.

### b3) Großteiliger Grundkautschuk

| Grundstufe | Einsatzstoffe | Menge |
|---|---|---|
| Vorlage | VE-Wasser: | 2301,37 g |
| | LS 200/0 Betr.(39,5%ig): | 23,93 g |
| | Natriumbicarbonat: | 7,18 g |
| | Kaliumpersulfat: | 5,67 g |
| Zulauf 1 | n-Butylacrylat: | 1852,20 g |
| | DCPA: | 37,80 g |
| | Zulauf gesamt: | 1890,00 g |
| Zulauf 2 | K30 (40%ig): | 28,35 g |
| | VE-Wasser | 468,50 g |
| | Zulauf gesamt: | 496,85 g |

| | |
|---|---|
| Gesamtmonomere: | 1890,00 g |
| Gesamtmenge: | 4725,00 g |
| Gesamtfeststoff: | 1890,00 g |
| Feststoffgehalt theor.: | 40,00 |

VE-Wasser und Grundstufe b1) unter Ausschluss von Sauerstoff vorlegen und unter Rühren auf 60°C aufheizen. Natriumhydrogencarbonat und Kaliumpersulfat zugeben. Zulauf1 setzt sich aus 98% n - Butylacrylat und 2% DCPA (Dicyclopentadienylacrylat) zusammen, Zulauf 2 aus Seife Na-C12-sulfonat (K30) und VE-Wasser. Zulauf 1 und 2 starten und in 3,5 Stunden zudosieren. Nach Zulaufende auf 65°C aufheizen, 2 Stunden nachpolymerisieren.

### B4) Großteiliger Pfropfkautschuk B-ii

| Pfropfstufe | Einsatzstoffe | Menge |
|---|---|---|
| Vorlage | Grundstufe (40,3%ig) | 4675,00 g |
| | VE-Wasser: | 3006,01 g |
| | K30 (40%ig): | 8,48 g |
| Zugabe 1 | Kaliumpersulfat: | 5,02 g |
| Zulauf 1 | Styrol: | 408,21 g |
| | Monomersumme Zul. 1: | 408,21 g |
| Zulauf 2 | Styrol: | 635,86 g |
| | Acrylnitril: | 211,95 g |
| Monomersumme Zul. 2: | 847,81 g | |
| Pfropfmonomere gesamt: | 1256,02 g | |
| Pfropfgrad: | 40 % | |
| Gesamtmenge: | 9013,62 g | |
| Gesamtfeststoff: | 3154,77 g | |
| Feststoffgehalt theor.: | 35,00 % | |

Grundstufe und entmineralisiertes Wasser in den 10 I Kolben vorlegen und auf 60°C aufheizen. Rührerdrehzahl auf 235 Upm erhöhen, K30 und Zugabe1 (KPS) zugeben. Zulauf1 (Styrol) in einer Stunde zudosieren und 30 Minuten nachpolymerisieren. Zulauf2 (Styrol/Acrylnitril 75:25) in 2 Stunden zudosieren. Rührerdrehzahl auf 200 Upm zurücknehmen und 2 Stunden bei 60°C nachpolymerisieren.

### c) Herstellung der thermoplastischen Zusammensetzungen

Die Pfropfkautschuke B wurden durch Ausfällen mit wässriger MgSO₄-Lösung isoliert und bei 60 °C im Vakuum bis auf ca. 2 % Restfeuchte getrocknet.

Die Abmischung der Pfropfkautschuke (Komponenten B-i und B-ii) mit den in Tabelle 2 aufgeführten SAN-Copolymeren (Komponente A) erfolgte auf einer Anlage ZDSK 30 bei 250 °C. Die Mischungen enthielten jeweils 40 Gew % B und 60 Gew % A.

Entsprechende ASA-Zusammensetzungen können mit 0.5 Gew.-Teilen an Stabilisator (wie Tinuvin^{®} 770) hergestellt und getestet werden.

**Tabelle 1a: Mischungen von Komponenten A 3 mit Komponente**

| B-i im Gew.-Verhältnis 60:40 bei 250 °C | | | | |
|---|---|---|---|---|
| Nr. | S/AN Verhältnis in Pfropfhülle von Komponente B-i | Delta AN (Matrix-Pfropfhülle) | Delta ak zum Standard* | Restmonomere AN (ppm) |
| 1 (Vgl.) | 65/35 | 5 | 0 | 50 |
| 2* | 70/30 | 0 | +2 | 40 |
| 3* | 73/27 | 3 | +5 | 40 |
| 4 | 75/25 | 5 | +2 | 30 |
| 5 (Vgl.) | 80/20 | 10 | -5 | 25 |

| | | | | |
|---|---|---|---|---|
| *nicht erfindungsgemäß | | | | |

Tabelle 1a ist zu entnehmen, dass die erfindungsgemäße thermoplastische Formmassen (Mischung 4) gegenüber der thermoplastischen Formmasse 1 (Vgl.), welche einen gleichen Acrylnitril-Gehalt von Hartmatrix A und Pfropfhüllte B2 (Delta AN = 5) aufweist, einen reduzierten Restmonomeren-Anteil an Acrylnitril aufweisen. Die thermoplastischen Formmasse 5 (Vgl.), welche ein Delta AN gleich 10, aufweist besitzt zwar einen reduzierten Restmonomeren-Anteil, jedoch verliert diese Formmasse deutlich an mechanischen Eigenschaften, hier dargestellt durch die Kerbschlagzähigkeit (ak).

**Tabelle 1b: Mischungen von Komponenten A 4 (S/AN 64/36) mit Komponente B-i im Gew.-Verhältnis 60:40 bei 250 °C**

| Nr. | S/AN Verhältnis in Pfropfhülle von Komponente B-ii | Delta AN (Matrix-Pfropfhülle) | Delta ak zum Standard* | Restmonomere AN (ppm) |
|---|---|---|---|---|
| 6 (Vgl.) | 65/35 | 1 | 0 | 70 |
| 7 | 70/30 | 6 | 0 | 50 |
| 8 | 73/27 | 9 | 0 | 45 |
| 9* | 75/25 | 11 | 0 | 45 |
| 10 (Vgl.) | 80/20 | 16 | -3 | 35 |

| | | | | |
|---|---|---|---|---|
| *nicht erfindungsgemäß | | | | |

Tabelle 1b ist zu entnehmen, dass die erfindungsgemäße thermoplastische Formmassen (Mischungen 7 und 8) gegenüber der thermoplastischen Formmasse 6 (Vgl.), welche einen gleichen Acrylnitril-Gehalt von Hartmatrix A und Pfropfhüllte B2 (Delta AN = 1) aufweist, einen reduzierten Restmonomeren-Anteil an Acrylnitril aufweisen. Die thermoplastischen Formmasse 10 (Vgl.), welche ein Delta AN gleich 16 aufweist, besitzt zwar einen reduzierten Restmonomeren-Anteil, jedoch verliert diese Formmasse deutlich an mechanischen Eigenschaften, hier dargestellt durch die Kerbschlagzähigkeit.

**Tabelle 2a: Herstellung und Eigenschaften der Styrol-Acrylnitril-Copolymere (SAN) (Komponente A); RZA = Raumzeitausbeute**

| Nr. | A1 (V) | A2 (V) | A3 | A4 |
|---|---|---|---|---|
| Zulauf [Gew.-%] | | | | |
| Styrol | 65,6 | 55,9 | 48,9 | 43,9 |
| Acrylnitril | 14,4 | 19,1 | 24,1 | 28,0 |
| Ethylbenzol | 20,0 | 25,0 | 27,0 | 28,1 |
| Polymerisationstemperatur [°C] | 140,5 | 141 | 142 | 141 |
| Verweilzeit [h] | 4,0 | 3,96 | 3,83 | 3,67 |
| RZA [kg/l*h] | 0,116 | 0,109 | 0,118 | 0,118 |
| AN-Gehalt im Polymeren [Gew.-%] | 20 | 25 | 30 | 35,9 |
| VZ [ml/g] | 80 | 80 | 80 | 80 |

Der AN-Gehalt im Polymer [Gew.-%] wurde bestimmt durch FT-IR an KBr Presslingen.

Entsprechende Ergebnisse können auch an ASA-Zusammensetzungen mit weiterem Polymer C (wie Polycarbonat) und/oder Additiven beobachtet werden.

## Patentansprüche

1. Verfahren zur Herstellung einer thermoplastischen Formmasse mit reduziertem Restmonomeren-Anteil enthaltend, bezogen auf die Summer der Komponenten A bis D:
a) 30 bis 85 Gew.-% eines oder mehrerer Styrol-Copolymere als Komponente A, aufgebaut aus Styrol und mindestens 30 Gew.-% Acrylnitril, bezogen auf Komponente A,
b) 14,9 bis 69,9 Gew.-% eines oder mehrerer schlagzäh-modifizierender Pfropfkautschuke ohne olefinische Doppelbindung in der Kautschukphase als Komponente B, aufgebaut aus:
b1) mindestens einer Pfropfgrundlage B1, wobei Pfropfgrundlage B1 aufgebaut ist aus:
b11) 80 bis 99,9 Gew.-% mindestens eines C1-8-Alkylesters der Acrylsäure, vorzugsweise C4-8-Alkylacrylaten, insbesondere n-Butylacrylat und/oder 2-Ethylhexylacrylat, als Komponente B-11,
b12) 0,1 bis 5 Gew.-% mindestens eines polyfunktionellen vernetzenden Monomeren aus der Gruppe Butylendiacrylat, Divinylbenzol, Butaindioldimethacrylat, Trimethylolpropant-ri(meth)acrylat, Diallylmethacrylat, Diallylmaleat, Diallylfumarat, Triallylmethacrylat, Triallylisocyanurat, Diallylphthalat, Allylmethacrylat und/oder Dihydrodicyclopentadienylacrylat als Komponente B-12, und ggf.
b13) 0 bis 19,9 Gew.-% Monomeren aus der Gruppe: Vinylacetat, (Meth)acrylnitril, Styrol, Methyl-Styrol, Methylmethacrylat oder Vinylether, als Komponente B-13, und
b2) mindestens einer Acrylnitril-haltigen Pfropfhülle B2, wobei die Pfropfhülle B2 aufgebaut ist aus:
b21) 70 bis 80 Gew.-% eines vinylaromatischen Monomeren als Komponente B-21 und
b22) 20 bis 30 Gew.-% Acrylnitril als Komponente B-22,
c) 0 bis 15 Gew.-% eines von den Komponenten A und B unterschiedlichen Polymers als Komponente C, und
d) 0,1 bis 5 Gew.-% Additiv als Komponente D,
wobei die Differenz im Acrylnitril-Gehalt zwischen der Komponente A und der Pfropfhülle B2 mindestens 5 und maximal 10 Gew.-% beträgt,
umfassend die Schritte:
i) Mischen der Komponenten A und B, und optional der Komponente(n) C und/oder D,
ii) Compoundieren der unter Schritt i) gemischten Komponenten, und
iii) Abkühlen und ggf. weitere Verfahrensschritte,
wobei in der thermoplastischen Formmasse der Restmonomeren-Anteil an Acrylnitril kleiner 100 ppm, vorzugsweise kleiner 80 ppm ist, und
wobei der mittels chromatografischer Methoden bestimmte Restmonomeren-Anteil an Acrylnitril in der thermoplastischen Formmasse um mindestens 10 % geringer ist als der Restmonomeren-Anteil an Acrylnitril in vergleichbaren thermoplastischen Formmassen, die in den Komponenten A und B2 den gleichen Acrylnitril-Gehalt aufweisen.

2. Verfahren gemäß Anspruch 1, wobei Komponente A ein Styrol-Acrylnitril-Copolymer und/oder ein α-Methylstyrol-Acrylnitril-Copolymer ist und der Restmonomeren-Anteil in der thermoplastischen Formmasse an Acrylnitril kleiner 75 ppm ist.

3. Verfahren gemäß einem der Ansprüche 1 oder 2, wobei die Komponente A ein Styrol-Acrylnitril-Copolymer mit einem Acrylnitril-Gehalt von 30 bis 35 Gew.-% und einem Styrol-Gehalt von 65 bis 70 Gew.-% ist.

4. Verfahren gemäß einem der Ansprüche 1 bis 3, wobei Komponente B aufgebaut ist aus:
b1) 55 bis 80 Gew.-%, insbesondere 55 bis 65 Gew.-% einer teilchenförmigen Pfropfgrundlage B1 mit einer Glasübergangstemperatur (bestimmt nach DIN 53765) unterhalb von 0 °C, und
b2) 20 bis 45 Gew.-%, insbesondere 35 bis 45 Gew.-% einer Pfropfhülle B2.

5. Verfahren gemäß einem der Ansprüche 1 bis 4, wobei Komponente B einen mittleren Teilchendurchmesser von 0,05 bis 1,5 µm aufweist.

6. Verfahren gemäß einem der Ansprüche 1 bis 5, wobei Komponente B einen mittleren Teilchendurchmesser von 1,6 bis 20 µm aufweist.

## Claims

1. Process for the production of a thermoplastic molding composition with reduced residual monomer content comprising, based on the entirety of components A to D:
a) 30 to 85% by weight of one or more styrene copolymers as component A, composed of styrene and at least 30% by weight of acrylonitrile, based on component A,
b) 14.9 to 69.9% by weight of one or more impact-modifying graft rubbers having no olefinic double bond in the rubber phase as component B, composed of:
b1) at least one graft base B1, wherein graft base B1 is composed of:
b11) 80 to 99.9% by weight of at least one C1-8-alkyl ester of acrylic acid, preferably C4-8 alkyl acrylates, in particular n-butyl acrylate and/or 2-ethylhexyl acrylate, as component B-11,
b12) 0.1 to 5% by weight of at least one polyfunctional crosslinking monomer from the group of butylene diacrylate, divinylbenzene, butanediol dimethacrylate, trimethylolpropane tri(meth)acrylate, diallyl methacrylate, diallyl maleate, diallyl fumarate, triallyl methacrylate, triallyl isocyanurate, diallyl phthalate, allyl methacrylate and/or dihydrodicyclopentadienyl acrylate as component B-12, and optionally
b13) 0 to 19.9% by weight of monomers from the following group: vinyl acetate, (meth)acrylonitrile, styrene, methylstyrene, methyl methacrylate or vinyl ether, as component B-13; and
b2) at least one acrylonitrile-containing graft shell B2, wherein the graft shell B2 is composed of:
b21) 70 to 80% by weight of a vinylaromatic monomer as component B-21 and
b22) 20 to 30% by weight of acrylonitrile as component B-22,
c) 0 to 15% by weight of a polymer as component C different from components A and B, and
d) 0.1 to 5% by weight of additive as component D,
wherein the difference between the acrylonitrile content between the component A and the graft shell B2 is at least 5 and a maximum of 10 wt.-%, comprising the steps:
i) mixing of components A and B, and optionally of component(s) C and/or D,
ii) compounding of the components mixed in step i), and
iii) cooling and optionally further process steps.
wherein the residual acrylonitrile monomer content in the thermoplastic molding composition is smaller than 100 ppm, preferably smaller than 80 ppm, and wherein the residual monomer content of acrylonitrile in the thermoplastic molding composition determined by chromatographic methods is smaller by at least 10% than the residual monomer content of acrylonitrile in comparable thermoplastic molding compositions which have identical acrylonitrile content in components A and B2.

2. Process according to claim 1, wherein component A is a styrene-acrylonitrile copolymer and/or an α-methylstyrene-acrylonitrile copolymer and the residual content of acrylonitrile monomer in the thermoplastic molding composition is smaller than 75 ppm.

3. Process according to any of claims 1 or 2, wherein component A is a styrene-acrylonitrile copolymer with an acrylonitrile content of 30 to 35% by weight and a styrene content of 65 to 70% by weight.

4. Process according to any of claims 1 to 3, wherein component B is composed of:
b1) 55 to 80% by weight, in particular 55 to 65% by weight, of a particulate graft base B1 with glass transition temperature (determined according to DIN 53765) below 0°C, and
b2) 20 to 45% by weight, in particular 35 to 45% by weight, of a graft shell B2.

5. Process according to any of claims 1 to 4, wherein component B has a median particle diameter of 0.05 to 1.5 µm.

6. Process according to any of claims 1 to 5, wherein component B has a median particle diameter of 1.6 to 20 µm.

## Revendications

1. Procédé de préparation d'une masse de moulage thermoplastique présentant une proportion réduite de monomères résiduels, contenant, par rapport à la somme des composants A à D :
a) 30 à 85% en poids d'un ou de plusieurs copolymères de styrène en tant que composant A, composé de styrène et d'au moins 30% en poids d'acrylonitrile, par rapport au composant A,
b) 14,9 à 69,9% en poids d'un ou plusieurs caoutchoucs greffés modifiant la résistance aux chocs sans double liaison oléfinique dans la phase de caoutchouc en tant que composant B, composés de :
b1) au moins une base de greffage B1, la base de greffage B1 étant composée de :
b11) 80 à 99,9% en poids d'au moins un ester alkylique en C1-8 de l'acide acrylique, de préférence des acrylates de C4-8-alkyle, en particulier l'acrylate de n-butyle et/ou l'acrylate de 2-éthylhexyle, en tant que composant B-11,
b12) 0,1 à 5% en poids d'au moins un monomère réticulant de manière polyfonctionnelle du groupe diacrylate de butylène, divinylbenzène, diméthacrylate de butanediol, tri(méth)acrylate de triméthylolpropane, méthacrylate de diallyle, maléate de diallyle, fumarate de diallyle, méthacrylate de triallyle, isocyanurate de triallyle, phtalate de diallyle, méthacrylate d'allyle et/ou acrylate de dihydrodicyclopentadiényle en tant que composant B-12, et le cas échéant
b13) 0 à 19,9% en poids de monomères du groupe : acétate de vinyle, (méth)acrylonitrile, styrène, méthylstyrène, méthacrylate de méthyle ou vinyléther, en tant que composant B-13, et
b2) au moins une enveloppe greffée contenant de l'acrylonitrile B2, l'enveloppe greffée B2 étant composée de :
b21) 70 à 80% en poids d'un monomère aromatique de vinyle en tant que composant B-21 et
b22) 20 à 30% en poids d'acrylonitrile en tant que composant B-22,
c) 0 à 15% en poids d'un polymère différent des composants A et B en tant que composant C et
d) 0,1 à 5% en poids d'additifs en tant que composant D,
la différence de la teneur en acrylonitrile entre le composant A et l'enveloppe greffée B2 représentant au moins 5 et au maximum 10% en poids,
comprenant les étapes :
i) mélange des composants A et B et éventuellement du/des composants(s) C et/ou D,
ii) compoundage des composants mélangés à l'étape i) et
iii) refroidissement et le cas échéant d'autres étapes de procédé,
la proportion de monomères résiduels d'acrylonitrile dans la masse de moulage thermoplastique étant inférieure à 100 ppm, de préférence inférieure à 80 ppm et
la proportion de monomères résiduels d'acrylonitrile dans la masse de moulage thermoplastique, déterminée au moyen des méthodes chromatographiques, étant inférieure d'au moins 10% à la proportion de monomères résiduels d'acrylonitrile dans des masses de moulage thermoplastiques comparables qui présentent la même teneur en acrylonitrile dans les composants A et B2.

2. Procédé selon la revendication 1, le composant A étant un copolymère de styrène-acrylonitrile et/ou un copolymère d'α-méthylstyrène-acrylonitrile et la proportion de monomères résiduels d'acrylonitrile dans la masse de moulage thermoplastique étant inférieure à 75 ppm.

3. Procédé selon l'une des revendications 1 ou 2, le composant A étant un copolymère de styrène-acrylonitrile présentant une teneur en acrylonitrile de 30 à 35% en poids et une teneur en styrène de 65 à 70% en poids.

4. Procédé selon l'une des revendications 1 à 3, le composant B étant composé de :
b1) 55 à 80% en poids, en particulier 55 à 65% en poids, d'une base de greffage particulaire B1 présentant une température de transition vitreuse (déterminée selon la norme DIN 53765) inférieure à 0°C et
b2) 20 à 45% en poids, en particulier 35 à 45% en poids d'une enveloppe greffée B2.

5. Procédé selon l'une des revendications 1 à 4, le composant B présentant un diamètre moyen de particule de 0,05 à 1,5 µm.

6. Procédé selon l'une des revendications 1 à 5, le composant B présentant un diamètre moyen de particule de 1,6 à 20 µm.
